# EUROPÄISCHE PATENTANMELDUNG

(11) **EP 1 652 872 A1**
(43) Veröffentlichungstag der Anmeldung: **03.05.2006**
(21) Anmeldenummer: 05022338.7
(22) Anmeldetag: 13.10.2005
(51) Int. Cl.: C08G 77/60

(54) **Verfahren zur Herstellung von vernetzten und verzweigten Organopolysilanen**

(30) Priorität: 28.10.2004 DE 102004052423
(71) Anmelder: Wacker Chemie AG, 81737 München (DE)
(72) Erfinder: Knies, Wolfgang, Dr., 84489 Burghausen (DE); Bögershausen, Karin, 84489 Burghausen (DE); Weinhart, Annemarie, 84533 Haiming (DE)
(74) Vertreter: Fritz, Helmut

(57) **Zusammenfassung**

Gegenstand der Erfindung ist ein Verfahren zur Herstellung von vernetzten oder verzweigten Organopolysilanen (P) durch Umsetzung von Halogensilanen mit elementarem Metall, das ausgewählt wird aus Alkali- und Erdalkalimetall,
wobei die Reaktionsmischung unmittelbar nach beendeter Umsetzung bei mindestens 50°C für mindestens 30 Sekunden mit einem Mineral (M), das ausgewählt wird aus Polykieselsäuren, Silikaten und Alumosilikaten behandelt wird.

## Beschreibung

Die Erfindung betrifft ein Verfahren zur Herstellung von vernetzten und verzweigten Organopolysilanen (P).

Die Herstellung von Polysilanen ist beispielsweise in EP 949289 A und US 4,921,321 A beschrieben.

Nach bekannten Verfahren hergestellte Organopolysilane, die sowohl lineare Anteile als auch Verzweigungen und Vernetzungen aufweisen, lassen sich sehr schlecht filtrieren,-da diese feinteilige Niederschläge bilden. Dies treibt die Kosten für deren Herstellung extrem in die Höhe.

In JP 9309954 A ist die Reinigung von Organopolysilanen durch Lösen in organischen Lösemitteln, Behandeln mit Diatomeenerde und anschliessender Filtrierung beschrieben.

Der Erfindung liegt die Aufgabe zugrunde, die Filtrierbarkeit von verzweigten und vernetzten Organopolysilanen zu verbessern.

Gegenstand der Erfindung ist ein Verfahren zur Herstellung von vernetzten oder verzweigten Organopolysilanen (P), die mindestens eine Einheit, die ausgewählt wird aus Einheiten der allgemeinen Formeln 1 und 2

RSi≡ (1),

=Si= (2),

und mindestens eine Einheit der allgemeinen Formel 3

R₂Si= (3),

und gegebenenfalls Einheiten der allgemeinen Formel 4

R₃Si- (4),

enthalten,
bei dem Silan, das ausgewählt wird aus Silanen der allgemeinen Formeln 1a und 2a

RSiX₃ (1a),

SiX₄ (2a),

und Silan der allgemeinen Formel 3a

R₂SiX₂ (3a),

und gegebenenfalls Silan der allgemeinen Formel 4a

R₃SiX (4a),

wobei
- **R**: Wasserstoff oder einen Kohlenwasserstoffrest mit 1 bis 18 Kohlenstoffatomen und
- **X**: Fluor, Chlor oder Brom bedeuten,
mit elementarem Metall, das ausgewählt wird aus Alkali- und Erdalkalimetall, umgesetzt wird,
wobei die Reaktionsmischung unmittelbar nach beendeter Umsetzung bei mindestens 50°C für mindestens 30 Sekunden mit einem Mineral (M), das ausgewählt wird aus Polykieselsäuren, Silikaten und Alumosilikaten behandelt wird.

Die dabei entstehenden vernetzten oder verzweigten Organopolysilane (P) lassen sich gut filtrieren.

Die Umsetzung aus den Silanen erfolgt vorzugsweise bei mindestens 20°C und höchstens 200°C, insbesondere mindestens 60°C und höchstens 160°C.

Falls die Temperatur bei der Umsetzung aus den Silanen mindestens 50°C beträgt, wird die Reaktionsmischung vor der Behandlung mit Mineral (M) nicht unter 50°C abgekühlt. Falls die Temperatur bei der Umsetzung aus den Silanen unter 50°C beträgt, wird die Reaktionsmischung vor der Behandlung mit Mineral (M) auf mindestens 50°C erwärmt.

Bei dem Verfahren werden pro 100 Molteile Silan der allgemeinen Formel 3a vorzugsweise mindestens 2 Molteile, besonders bevorzugt mindestens 5 Molteile, die ausgewählt werden aus Silanen der allgemeinen Formeln 1a und 2a eingesetzt. Pro 100 Molteile Silan der allgemeinen Formel 3a werden vorzugsweise höchstens 60 Molteile, besonders bevorzugt höchstens 30 Molteile, die ausgewählt werden aus Silanen der allgemeinen Formeln 1a und 2a eingesetzt.

Vorzugsweise bedeutet **R** einen von ethylenisch oder acetylenisch ungesättigten Bindungen freien Kohlenwasserstoffrest mit 1 bis 18 Kohlenstoffatomen.

Beispiele für Kohlenwasserstoffreste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Bevorzugt handelt es sich bei dem Rest **R** um einen Phenylrest oder linearen Alkylrest, insbesondere mit 1 bis 10, besonders 1 bis 6 Kohlenstoffatomen. Besonders bevorzugte Kohlenwasserstoffreste **R** sind n-Propyl-, Ethyl- und insbesondere Methylrest.

**X** bedeutet vorzugsweise Chlor.

Als elementare Metalle werden vorzugsweise Li, Na, K und Mg eingesetzt. Wenn Magnesium eingesetzt wird ist die Anwesenheit von Übergangsmetallhalogeniden bei der Umsetzung bevorzugt, insbesondere von ZnCl₂ und FeCl₃.

Das Mineral (M) kann in Pulverform oder granulierter Form zugegeben werden. Die Polykieselsäuren und Silikate können arm an Kationen sein, wie Kieselgur, das beispielsweise als Diatomeenerde oder Infusorienerde vorkommt, oder reich an Kationen sein, wie Beryll, Opal, Talk. Ein bevorzugtes Beispiel für Diatomeenerde ist Celite 455 (Merck-Schuchardt). Bei den Alumosilikaten sind teilweise Siliciumatome der Silikate durch Aluminiumatome ersetzt. Beispiele für Alumosilikate sind Glimmer, Felspäte, Perlite und Zeolithe. Ein bevorzugtes Beispiel für Perlite ist Perlite C (Fa. Pall).

Die Umsetzung wird vorzugsweise unter Schutzgas, insbesondere Ar oder N₂ durchgeführt.

Der Druck bei der Umsetzung liegt vorzugsweise bei 1 bar, kann aber auch erheblich höher oder niedriger sein.

Die Umsetzung wird vorzugsweise in einem aprotischen Lösungsmittel durchgeführt. Beispiele für solche Lösungsmittel sind Ether, wie Dioxan, Tetrahydrofuran, Diethylether, Diisopropylether, Diethylenglycoldimethylether; Kohlenwasserstoffe, wie Pentan, n-Hexan, Hexan-Isomerengemische, Heptan, Oktan, Dodecan, Waschbenzin, Petrolether, Benzol, Toluol, Xylole, Tetrahydronaphthalin; oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Die Mineral (M) enthaltende Reaktionsmischung wird vorzugsweise nach dem Abkühlen filtriert.

Vorzugsweise wird die Lösung der Organopolysilane (P) nach der Behandlung mit Mineral (M) mit Alkohol gefällt. Als Alkohol sind Methanol, Ethanol, Isopropanol, Propanol und Butanole bevorzugt.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1 (erfindungsgemäss)

Ein Fünfhalskolben, der mit einem Rührer, einem Tropftrichter, einem Temperaturfühler, einem Rückflusskühler und einer Gaszufuhr versehen war, wurde mit Stickstoff gespült. In diesen wurden ca. 1500 ml Toluol vorgelegt. In dieses wurden 137 g in kleine Stücke geschnittenes Natrium gegeben. Die Mischung wurde auf 106-107°C aufgeheizt. Anschliessend wurde der Rührer mit sich langsam steigernder Rührgeschwindigkeit gestartet. Die endgültige Rührgeschwindigkeit betrug etwa 430 rpm. Nach ca. 30 Minuten wurde ein Gemisch von 420 g Phenylmethyldichlorsilan, 39 g Methyltrichlorosilan und 17 g Dimethyldichiorosilan zugetropft. Die Tropfgeschwindigkeiten wurden so gewählt, dass das Toluol am Sieden gehalten wurde (ca. 110°C). In der Regel dauerte das Zutropfen ca. 60 Minuten. Nach beendeter Zugabe wurde die Temperatur der Heizung auf 110°C engestellt und noch eine Stunde nachreagiert. Nun wurde Alumosilikat (20 g Perlite C) zugegeben und die Mischung weitere 10 Minuten gekocht. Anschliessend wurde die Heizung entfernt und das Reaktionsgemisch langsam abgekühlt. Die auf Raumtemperatur abgekühlte Mischung wurde über ein Druckfilter (1 atm Stickstoff) mit einem Filterpapier (Porengrösse 5 µm) abfiltriert.
Die Filtration war innerhalb von 1 Minute beendet.
Die erhaltene Lösung wurde eingeengt und durch Eingiessen der Lösung in Isopropanol wurde das Polysilan ausgefällt. Das Polysilan wurde abfiltriert und getrocknet.

### Beispiel 2 (nicht erfindungsgemäss)

Beispiel 1 wurde durchgeführt mit dem einen Unterschied, dass kein Alumosilikat zugegeben wurde.
Die Filtration dauerte mehrere Stunden.

### Beispiel 3 (erfindungsgemäss)

Beispiel 1 wurde wiederholt mit dem Unterschied, dass 5 g Perlite C zugegeben wurden.
Die Filtration war in 1 Minute beendet.

### Beispiel 4 (erfindungsgemäss)

Beispiel 1 wurde wiederholt mit dem Unterschied, dass 20 g Diatomeenerde (Celite 455) zugegeben wurden.
Die Filtration war in 1 Minute beendet.

## Patentansprüche

1. Verfahren zur Herstellung von vernetzten oder verzweigten Organopolysilanen (P), die mindestens eine Einheit, die ausgewählt wird aus Einheiten der allgemeinen Formeln 1 und 2
RSi≡ (1),
=Si= (2),
und mindestens eine Einheit der allgemeinen Formel 3
R₂Si= (3),
und gegebenenfalls Einheiten der allgemeinen Formel 4
R₃Si- (4),
enthalten,
bei dem Silan, das ausgewählt wird aus Silanen der allgemeinen Formeln 1a und 2a
RSiX₃ (1a),
SiX₄ (2a),
und Silan der allgemeinen Formel 3a
R₂SiX₂ (3a),
und gegebenenfalls Silan der allgemeinen Formel 4a
R₃SiX (4a),
wobei
**R** Wasserstoff oder einen Kohlenwasserstoffrest mit 1 bis 18 Kohlenstoffatomen und
**X** Fluor, Chlor oder Brom bedeuten,
mit elementarem Metall, das ausgewählt wird aus Alkali- und Erdalkalimetall, umgesetzt wird, wobei die Reaktionsmischung unmittelbar nach beendeter Umsetzung bei mindestens 50°C für mindestens 30 Sekunden mit einem Mineral (M), das ausgewählt wird aus Polykieselsäuren, Silikaten und Alumosilikaten behandelt wird.

2. Verfahren nach Anspruch 1, bei dem pro 100 Molteile Silan der allgemeinen Formel 3a 2 bis 60 Molteile, die ausgewählt werden aus Silanen der allgemeinen Formeln 1a und 2a, eingesetzt werden.

3. Verfahren nach Anspruch 1 und 2, bei dem **R** ein Phenylrest oder linearer Alkylrest mit 1 bis 10 Kohlenstoffatomen ist.

4. Verfahren nach Anspruch 1 bis 3, bei dem das elementare Metall ausgewählt wird aus Li, Na, K und Mg.

5. Verfahren nach Anspruch 1 bis 4, bei dem die Umsetzung in einem aprotischen Lösungsmittel durchgeführt wird.

6. Verfahren nach Anspruch 1 bis 4, bei dem das Mineral (M) ausgewählt wird aus Kieselgur und Perlite.
